# DEMANDE DE BREVET EUROPEEN

(11) **EP 1 982 962 A1**
(43) Date de publication de la demande: **22.10.2008**
(21) Numéro de dépôt: 07106260.8
(22) Date de dépôt: 16.04.2007
(51) Int. Cl.: C02F 3/28, C02F 3/12

(54) **Procédé pour la conversion d'une fosse septique en une station d'épuration biologique d'eau usée.**

(71) Demandeur: SA Fontindustrie, 4130 Esneux (BE)
(72) Inventeur: Lorquet, Alain, 4654, Charneux (BE)
(74) Mandataire: Vandeberg, Marie-Paule L.G.

(57) **Abrégé**

Procédé pour la conversion d'une fosse septique en une station d'épuration biologique d'eau usée, selon lequel on loge un module d'épuration aérobie du type à boue activée (9, 10, 11, 12, 14, 16, 17) dans ladite fosse septique (1), laquelle comprend un compartiment de digestion anaérobie (2) et un compartiment de sédimentation (3).

## Description

### Domaine de l'invention

L'invention se rapporte à l'épuration des eaux usées, spécialement des eaux usées domestiques.

L'invention concerne plus spécialement un procédé pour la conversion d'une fosse septique en une station d'épuration biologique d'eau usée, ladite fosse septique comprenant un compartiment de digestion anaérobie et un compartiment de sédimentation. L'invention concerne également un module pour la conversion d'une telle fosse septique en une station d'épuration d'eaux usées.

### État de la technique

Dans certaines régions, les habitations sont équipées d'installations autonomes d'épuration et d'évacuation des eaux usées. Ces installations autonomes comprennent habituellement une fosse septique, dans laquelle les eaux usées subissent une épuration partielle par digestion anaérobie des matières organiques, avant d'être évacuées dans le milieu naturel, par exemple un cours d'eau ou un puits perdant. Le degré d'épuration obtenu avec une fosse septique ne respecte toutefois plus les normes actuelles en matière d'épuration des eaux usées domestiques, particulièrement les normes européennes. Le respect des normes de salubrité publique actuellement en vigueur nécessite l'utilisation d'installations d'épuration biologique, associant une épuration anaérobie en fosse septique et une épuration aérobie. La construction de telles installations domestiques d'épuration biologique est généralement coûteuse. Associant une fosse septique et une unité d'épuration aérobie, ces installations présentent par ailleurs l'inconvénient d'occuper une grande superficie, ce qui peut poser problème dans certains cas.

Dans le document US-A 5 609 754, on propose une installation d'épuration biologique de volume réduit, associant une fosse septique à deux compartiments et un dispositif d'épuration aérobie qui se trouve logé dans un compartiment de la fosse septique. Dans cette installation, le dispositif d'épuration aérobie est du type à filtre bactérien. L'eau claire épurée qui en est recueillie est scindée en trois fractions : une fraction est recyclée dans la fosse septique, une autre fraction est recyclée dans le lit bactérien filtrant et une troisième fraction est évacuée de l'installation. Dans cette installation connue, l'utilisation d'un dispositif d'épuration aérobie du type à lit filtrant constitue un inconvénient de nature pécuniaire. Elle présente en outre l'inconvénient de nécessiter une double circulation interne des eaux en cours d'épuration et son exploitation est par ailleurs compliquée, notamment en ce qui concerne l'entretien du lit bactérien filtrant.

Dans les habitations existantes, déjà équipées de fosses septiques, on a songé adjoindre une unité d'épuration aérobie à la fosse septique existante, de manière à réduire le coût d'investissement. Ainsi, dans le document CA-2 158 407, on propose une installation pour l'épuration d'eaux usées, qui associe une fosse septique et un réacteur biologique aérobie du type à boue activée, disposé en aval de la fosse septique. Dans cette installation connue, le réacteur biologique aérobie est du type à fonctionnement intermittent, par lots successifs d'eau à traiter (mieux connu sous la dénomination anglo-saxonne « batch »). L'eau provenant de la fosse septique est introduite dans le réacteur par lots successifs réglés pour maintenir en permanence le niveau de l'eau dans le réacteur entre une valeur maximum et une valeur minimum. Cette installation connue présente l'inconvénient d'un grand encombrement. Par ailleurs, le fonctionnement intermittent, par lots successifs, complique sa construction et grève son coût, ce qui constitue un autre inconvénient.

### Résumé de l'invention

L'invention vise à remédier aux inconvénients précités des installations connues d'épuration biologiques des eaux usées.

L'invention a dès lors pour but de fournir un procédé pour convertir une fosse septique existante en une station d'épuration biologique, de manière simple et économique et de manière à obtenir un niveau d'épuration élevé.

L'invention a aussi pour objectif de fournir un procédé pour convertir une fosse septique existante en une station d'épuration biologique, sans impliquer une augmentation de l'encombrement.

Un autre objectif de l'invention consiste à fournir un module pour la conversion, au moyen du procédé précité, d'une fosse septique en une station d'épuration biologique d'eau usée.

Un objectif supplémentaire de l'invention est de fournir une installation d'épuration d'eau usée de faible encombrement, associant une fosse septique et une unité d'épuration aérobie.

En conséquence, le procédé selon l'invention se caractérise en ce qu'on loge, dans la fosse septique, un module d'épuration aérobie du type à boue activée.

### Description détaillée de l'invention

La fosse septique mise en oeuvre dans le procédé selon l'invention est bien connue en technique d'épuration des eaux et communément utilisée dans les installations autonomes de traitement des eaux usées domestiques. Elle comprend normalement un compartiment de digestion anaérobie et un compartiment de sédimentation. Dans le compartiment de digestion anaérobie, les matières organiques de l'eau sont soumises à une fermentation anaérobie conduisant à la production de dioxyde de carbone, de méthane et de dioxyde de soufre, que l'on évacue, et à la sédimentation d'une boue. Le compartiment de sédimentation est situé en aval du compartiment de digestion anaérobie, avec lequel il communique. Dans le compartiment de sédimentation, les matières solides insolubles de l'eau sédimentent et s'amoncellent sur le fond du compartiment. Le compartiment de digestion anaérobie comprend normalement un orifice pour l'admission de l'eau usée à traiter et le compartiment de sédimentation présente un orifice pour l'évacuation de l'eau clarifiée. Le passage de l'eau du compartiment de digestion anaérobie, en amont, dans le compartiment de sédimentation, en aval, se fait généralement par débordement au-dessus d'un seuil.

Dans la suite du présent mémoire, les expressions amont et aval sont considérées dans le sens de propagation de l'eau traitée.

La fosse septique est habituellement une construction monolithique en béton. D'autres matériaux ou modes de construction peuvent toutefois être utilisés sans sortir du cadre de l'invention. La fosse septique peut éventuellement comprendre plus de deux compartiments. Elle peut comprendre un compartiment de dégraissage, situé en amont du compartiment de digestion anaérobie.

Conformément à l'invention, on loge, dans la fosse septique un module d'épuration aérobie du type à boue activée.

L'épuration aérobie par boue activée est bien connue en technique. Dans ce type d'épuration, l'eau chargée de boue contenant des micro-organismes hétérotrophes est brassée avec de l'oxygène ou de l'air. Elle est ensuite soumise à une opération de clarification, pour la débarrasser de la boue. L'eau claire obtenue peut généralement être rejetée telle quelle dans le milieu naturel, par exemple un puits perdant.

Dans la station d'épuration obtenue au moyen du procédé selon l'invention, l'eau usée brute pénètre dans la fosse septique et, à l'issue du traitement dans ladite station, l'eau épurée est recueillie du module et rejetée dans le milieu naturel.

Dans une forme d'exécution particulière du procédé selon l'invention, le module d'épuration aérobie comprend un dispositif d'aération et une chambre de clarification ; on introduit de l'air, via le dispositif d'aération, dans le compartiment de sédimentation, on transfert l'eau dudit compartiment de sédimentation dans la chambre de clarification et on extrait de l'eau claire de la chambre de clarification.

Dans cette forme d'exécution de l'invention, le compartiment de sédimentation de la fosse septique joue le rôle d'une chambre d'épuration aérobie par boue activée.
La chambre de clarification est conçue de manière connue en soi pour favoriser une sédimentation des matières solides insolubles denses et libérer une eau claire. Elle comprend habituellement une chambre verticale de section transversale circulaire ou polygonale, de préférence carrée ou rectangulaire. Elle peut être en métal (par exemple en acier) ou en une matière polymérique (par exemple en polymère vinylique ou en polyester éventuellement renforcé de fibres de verre). Pour améliorer la clarification de l'eau, il est recommandé de disposer des chicanes dans la chambre de clarification. Celles-ci ont pour fonction de soumettre l'écoulement de l'eau dans la chambre, à des changements de direction favorisant la séparation des matières insolubles denses. Dans cette variante de l'invention, la chambre de décantation est avantageusement une chambre verticale de section carrée ou rectangulaire, dans laquelle les chicanes sont alternativement fixées sur des faces opposées de la chambre.

Dans un mode de réalisation préféré de la forme d'exécution particulière qui vient d'être décrite, l'eau qui est transférée du compartiment de sédimentation de la fosse septique dans la chambre de clarification débouche dans le bas de ladite chambre de clarification. Dans ce mode de réalisation du procédé, l'expression « dans le bas » désigne la moitié inférieure de la hauteur de la chambre de clarification, de préférence le tiers inférieur, plus spécialement le quart inférieur, de ladite hauteur. Toutes autres choses égales par ailleurs, on préfère que l'entrée de l'eau dans la chambre de clarification se fasse le plus près possible du fond de celle-ci, tout en restant compatible avec un fonctionnement normal de la station d'épuration.

Dans un autre mode de réalisation de la forme d'exécution particulière définie plus haut,
- l'eau du compartiment de sédimentation est transférée dans le bas de la chambre de clarification comme exposé plus haut ;
- l'extraction de l'eau claire est opérée au moyen d'une conduite dont une extrémité d'amont débouche dans la chambre de clarification et dont une extrémité d'aval traverse un trop-plein de la fosse septique ; et
- on colmate ledit trop-plein, autour de la conduite susdite.

Dans ce mode de réalisation de l'invention, l'extraction de l'eau claire est de préférence opérée dans la partie supérieure de la chambre de clarification. L'expression « la partie supérieure de la chambre de clarification » désigne la moitié supérieure de la hauteur de la chambre de clarification, de préférence le tiers supérieur, plus spécialement le quart supérieur, de ladite hauteur. Toutes autres choses égales par ailleurs, on préfère que l'extraction de l'eau claire se fasse le plus près possible du niveau normalement atteint par l'eau dans la chambre de clarification pendant une utilisation normale de la station d'épuration. Le trop-plein de la fosse septique est un orifice normalement présent sur toutes les fosses septiques du commerce, par où l'eau s'échappe au cours d'une utilisation normale de la fosse septique. La fonction de cet orifice a été explicitée plus haut au cours de l'exposé sur la fosse septique mise en oeuvre dans le procédé selon l'invention. Le colmatage du trop-plein de la fosse septique a pour fonction de forcer la totalité de l'eau traitée dans la fosse septique à transiter dans le module d'épuration aérobie, avant son évacuation dans le milieu naturel.

Dans la forme d'exécution particulière définie plus haut, des boues s'accumulent progressivement sur le fond de la chambre de clarification. Ces boues contiennent généralement des micro-organismes hétérotrophes et il est dès lors avantageux, selon l'invention, de recycler une partie au moins de ces boues dans le compartiment de sédimentation de la fosse septique.

Conformément à la définition de l'invention, la chambre de clarification est logée dans la fosse septique. Elle peut être logée invariablement dans le compartiment de digestion anaérobie ou dans le compartiment de sédimentation, voire dans un autre compartiment si la fosse septique comporte plus de deux compartiments. On préfère la loger dans le compartiment de digestion anaérobie.

En logeant un module d'épuration aérobie de conception originale dans une fosse septique classiquement utilisée pour l'épuration des eaux usées domestique, le procédé selon l'invention permet de convertir facilement, rapidement et à peu de frais, ladite fosse septique en une station d'épuration biologique d'eau usée, respectant les normes de salubrité publiques en usage.

L'invention concerne dès lors également un module pour convertir, en une station d'épuration biologique d'eau usée, une fosse septique comprenant un compartiment de digestion anaérobie et un compartiment de sédimentation disposé en aval du compartiment de digestion anaérobie, ledit module se caractérisant en ce qu'il est du type à épuration aérobie par boue activée et comprend
- un diffuseur d'air relié à un surpresseur ; et
- une chambre de clarification munie d'un conduit d'admission d'eau et d'un conduit d'évacuation d'eau claire ;
la chambre de clarification, le diffuseur d'air et les conduits d'admission et d'évacuation d'eau étant dimensionnés et profilés de telle sorte que la chambre de clarification puisse être logée à l'intérieur d'un compartiment de la fosse septique, le diffuseur d'air étant alors disposé dans le compartiment de sédimentation, le conduit d'admission d'eau ayant une extrémité d'amont dans le compartiment de sédimentation de la fosse septique et le conduit d'évacuation de l'eau claire ayant une extrémité d'aval qui traverse un trop-plein de la fosse septique.

Dans le module selon l'invention, le diffuseur d'air a pour fonction de diffuser de l'air dans l'eau qui se trouve dans le compartiment de sédimentation de la fosse septique, pendant une utilisation normale de la fosse septique. La fonction du surpresseur est de forcer de l'air dans le diffuseur. Il est normalement disposé à l'extérieur de la fosse septique.

La chambre de clarification et sa fonction technique ont été définies plus haut, en référence au procédé selon l'invention. Elle doit être dimensionnée pour pouvoir être logée dans un compartiment de la fosse septique, idéalement le compartiment de digestion anaérobie.

Dans une forme de réalisation préférée du module selon l'invention, le conduit d'admission d'eau de la chambre de clarification a son extrémité d'aval qui débouche dans le bas de ladite chambre de clarification. Le vocable « aval » et l'expression « dans le bas de la chambre » ont été définis plus haut en référence au procédé selon l'invention. Dans cette forme de réalisation de l'invention, une pompe ou similaire équipe normalement le conduit servant à l'admission de l'eau du compartiment de sédimentation de la fosse septique dans la chambre de clarification du module. Le type de pompe utilisée n'est pas critique pour la définition de l'invention.

Dans une autre forme de réalisation avantageuse du module selon l'invention, celui-ci comprend en outre un dispositif pour le transfert d'une boue de la chambre de clarification dans le compartiment de sédimentation de la fosse septique, ce dispositif de transfert comprenant une pompe reliée à un tuyau qui débouche dans le fond de la chambre de clarification.

La chambre de clarification est avantageusement équipée de chicanes, dont la disposition et la fonction ont été exposées plus haut, en référence au procédé selon l'invention.

Le procédé et le module selon l'invention permettent de convertir facilement, rapidement et à peu de frais, une fosse septique en une station d'épuration biologique d'eau usée, respectant les normes de salubrité publique en usage.

Le procédé et le module selon l'invention s'appliquent tout spécialement aux fosses septiques anciennes, en vue de les convertir en stations d'épuration biologique respectant les normes de salubrité publique.

L'invention concerne dès lors aussi une station pour l'épuration biologique d'eau usée, obtenue en convertissant une fosse septique au moyen du procédé selon l'invention, spécialement en logeant dans un compartiment de la fosse septique, un module conforme à l'invention.

### Brève description des figures

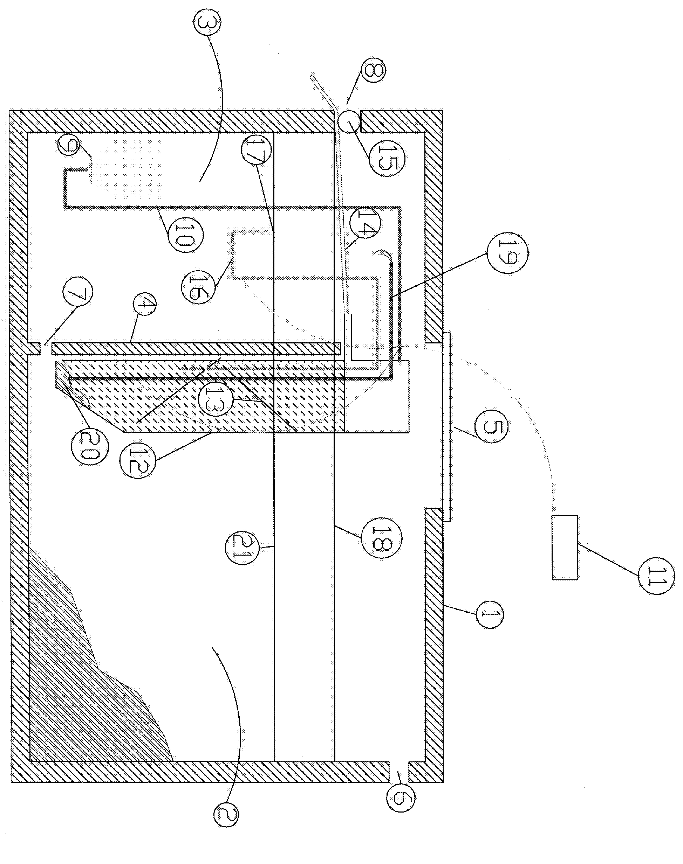

Des particularités et détails de l'invention vont apparaître au cours de la description suivante de la figure unique du dessin annexé, qui est une représentation schématique d'une station d'épuration conforme à l'invention.

### Description détaillée d'un mode de réalisation particulier

L'installation représentée à la figure comprend une fosse septique désignée, dans son ensemble, par la notation de référence 1. Il s'agit par exemple d'une fosse septique équipant originellement une ancienne habitation familiale et raccordée à un puits perdant creusé dans le jardin de l'habitation.

La fosse septique 1 est classiquement une enceinte préfabriquée en béton. Elle comprend, de manière connue en soi, un compartiment de digestion anaérobie 2 et un compartiment de sédimentation 3. Les deux compartiments sont séparés par une cloison verticale 4 et l'ensemble de la fosse est obturé par un couvercle amovible 5. La fosse septique 1 est normalement enterrée.

La paroi du compartiment de digestion anaérobie est percée d'un orifice 6 de raccordement à un collecteur (non représenté) d'évacuation des eaux usées domestiques de l'habitation. Le compartiment de sédimentation 3 est situé en aval du compartiment de digestion anaérobie 2 et les deux compartiments communiquent par une série d'ouvertures 7 percées à travers la cloison 4. La paroi du compartiment de sédimentation 3 est percée d'une ouverture 8 reliée au puits perdant. Avant la conversion de la fosse septique en une station d'épuration biologique, l'ouverture 8 servait de trop-plein pour l'évacuation des eaux ayant traversé la fosse septique.

Conformément à l'invention, la fosse septique contient un module d'épuration aérobie du type à boue activée. Ce module comprend un diffuseur d'air 9, logé dans le bas du compartiment de sédimentation 3. Le diffuseur 9 est relié à une conduite 10 qui s'étend jusqu'au-dessus du niveau d'eau. Cette conduite est alimentée en air grâce à un surpresseur 11 disposé en dehors de la fosse septique 1. Le module d'épuration aérobie comprend en outre une chambre de clarification 12, qui est logée dans le compartiment de digestion anaérobie 2. La chambre de clarification 12 est une chambre verticale de section transversale rectangulaire, accolée à la cloison 4. Elle est par exemple en métal. La chambre 12 comprend une paire de chicanes 13, dont la fonction va être explicitée plus loin.

La chambre 12 est reliée, à sa partie supérieure, à une conduite 14 qui chevauche la cloison 4 de la fosse septique et débouche dans l'ouverture de trop-plein 8 de la fosse septique. Un bourrage 15 obture hermétiquement l'orifice 8, autour de la conduite 14.

Un conduit 16 relie la partie inférieure de la chambre de clarification 12 au compartiment de sédimentation 3 de la fosse septique, en chevauchant la cloison 4. Le conduit 16 est relié à une pompe, non représentée, destinée à transférer de l'eau du compartiment 3 vers la chambre 12. L'extrémité d'amont 17 du conduit 16 est située dans la partie supérieure du compartiment 3, mais au-dessous du niveau maximum 18 atteint par l'eau, pendant une utilisation normale de l'installation.

La chambre 12 contient en outre un conduit 19 qui plonge dans le fond de la chambre 12 et débouche dans la partie supérieure du compartiment de sédimentation 3, au-dessus du niveau 18 précité. Le conduit 19 est muni d'une pompe à boue, non représentée.

Pendant une utilisation normale de l'installation représentée à la figure, la fosse septique 1 est remplie d'eau jusqu'à un niveau intermédiaire entre un niveau supérieur (le niveau maximum 18 défini plus haut) et un niveau inférieur 21, qui est le niveau de l'extrémité d'amont 17 du conduit 10. L'eau usée provenant de l'habitation pénètre dans le compartiment de digestion anaérobie 2 de la fosse septique par l'orifice 6. Elle y subit une épuration anaérobie, conduisant à une accumulation de boue dans le fond du compartiment.

L'eau passe dans le compartiment de sédimentation 3, via les orifices 7. Dans la chambre de sédimentation, l'eau est aérée par injection d'air ambiant via le surpresseur 11 et le diffuseur 9. Sous l'effet de l'aération, l'eau subit une épuration aérobie.

L'eau, chargée de boue activée, est pompée à l'extrémité d'amont 17 du conduit 16 et envoyée au fond de la chambre de décantation 12. L'eau monte naturellement dans la chambre 12, au fur et à mesure du pompage et elle est progressivement débarrassée des boues dont elle est chargées, qui sédimentent et s'accumulent dans le fond de la chambre 12. Les chicanes 13 soumettent l'eau à un écoulement en zigzag pendant son ascension dans la chambre 12. Cet écoulement en zigzag favorise la séparation des boues légères et des boues lourdes. Les chicanes 13 sont disposées de telle sorte qu'elles forment un angle avec la paroi de la chambre 12. Elles permettent ainsi de retenir les boues légères et d'éviter qu'elles ne montent à la surface.

Lorsque l'eau claire parvient au sommet de la chambre 12, elle s'écoule dans le conduit 15 jusqu'au puits perdant.

Les boues lourdes 20 accumulées dans le fond de la chambre de clarification 12 sont prélevées périodiquement et recyclées par le conduit 19 dans le compartiment de sédimentation 3.

## Revendications

1. Procédé pour la conversion d'une fosse septique (1) en une station d'épuration biologique d'eau usée, ladite fosse septique (1) comprenant un compartiment de digestion anaérobie (2) et un compartiment de sédimentation (3), **caractérisé en ce qu'**on loge, dans la fosse septique (1), un module d'épuration aérobie du type à boue activée.

2. Procédé selon la revendication 1, **caractérisé en ce que** le module d'épuration aérobie comprend un dispositif d'aération (9, 11) et une chambre de clarification (12), et **en ce qu'**on introduit de l'air, via le dispositif d'aération (9, 11), dans le compartiment de sédimentation (3), on transfert (17, 16) l'eau dudit compartiment de sédimentation (3) dans la chambre de clarification (12) et on extrait de l'eau claire de la chambre de clarification (12).

3. Procédé selon la revendication 2, **caractérisé en ce que** l'eau du compartiment de sédimentation (3) est transférée (17, 16) dans le bas de la chambre de clarification (12), **en ce que** l'extraction de l'eau claire est opérée au moyen d'une conduite (14) dont une extrémité d'amont débouche dans la chambre de clarification (12) et dont une extrémité d'aval traverse un trop-plein (8) de la fosse septique (1) et **en ce qu'**on colmate (15) ledit trop-plein (8), autour de la conduite susdite (14).

4. Procédé selon l'une quelconque des revendications 1 à 3, **caractérisé en ce qu'**on dispose des chicanes (13) dans la chambre de clarification (12) qui permettent de retenir des boues légères.

5. Procédé selon l'une quelconque des revendications 2 à 4, **caractérisé en ce que** l'on rejette dans le compartiment de sédimentation (3), des boues lourdes (20) que l'on soutire dans le bas de la chambre de clarification (12).

6. Procédé selon l'une quelconque des revendications 2 à 5, **caractérisé en ce qu'**on dispose la chambre de clarification (12) dans le compartiment de digestion anaérobie (2).

7. Module pour la conversion d'une fosse septique en une station d'épuration biologique d'eau usée, la fosse septique (1) comprenant un compartiment de digestion anaérobie (2) et un compartiment de sédimentation (3) disposé en aval du compartiment de digestion anaérobie, **caractérisé en ce qu'**il est du type à épuration aérobie par boue activée et comprend
- un diffuseur d'air (9) relié à un surpresseur (11) ; et
- une chambre de clarification (12) munie d'un conduit d'admission d'eau (17, 16) et d'une conduite d'évacuation d'eau claire (14) ;
la chambre de clarification (12), le diffuseur d'air (9) et les conduits d'admission (17, 16) et d'évacuation (14) d'eau étant dimensionnés et profilés de telle sorte que la chambre de clarification (12) puisse être logée à l'intérieur d'un compartiment (2) de la fosse septique, le diffuseur d'air (9) étant alors disposé dans le compartiment de sédimentation (3), le conduit d'admission d'eau (16) ayant une extrémité d'amont (17) dans le compartiment de sédimentation de la fosse septique et la conduite d'évacuation de l'eau claire (14) ayant une extrémité d'aval qui traverse un trop-plein (8) de la fosse septique.

8. Module selon la revendication 7, **caractérisé en ce qu'**une extrémité d'aval du conduit d'admission d'eau (16) débouche dans le bas de la chambre de clarification (12).

9. Module selon la revendication 7 ou 8, **caractérisé en ce qu'**il comprend en outre un dispositif pour le transfert de boues (20) de la chambre de clarification (12) dans le compartiment de sédimentation (3) de la fosse septique (1), ledit dispositif de transfert comprenant une pompe reliée à un tuyau (19) qui débouche dans le fond de la chambre de clarification (12).

10. Module selon l'une quelconque des revendications 7 à 9, **caractérisé en ce que** la chambre de clarification (12) est munie d'au moins une chicane (13) formant avec la paroi de la chambre, une zone de retenue des boues légères.

11. Station pour l'épuration biologique d'eau usée, obtenue par conversion d'une fosse septique (1) au moyen d'un procédé conforme à l'une quelconque des revendications 1 à 6.

12. Station d'épuration selon la revendication 11, comprenant une fosse septique (1) dans laquelle on a logé un module conforme à l'une quelconque des revendications 8 à 11.
